# EUROPÄISCHE PATENTSCHRIFT

(11) **EP 3 572 629 B1**
(45) Veröffentlichungstag und Bekanntmachung des Hinweises auf die Patenterteilung: **24.07.2024**
(21) Anmeldenummer: 19176171.7
(22) Anmeldetag: 23.05.2019
(51) Int. Cl.: F01D 25/16, F01D 25/18, F01D 25/24, B22F 3/105, B22F 5/00

(54) **LAGERKAMMERGEHÄUSE FÜR EINE STRÖMUNGSMASCHINE**
BEARING CHAMBER HOUSING FOR A TURBOMACHINE
BOÎTIER DE CHAMBRE DE PALIER POUR UNE TURBOMACHINE

(30) Priorität: 23.05.2018 DE 102018208038
(43) Veröffentlichungstag der Anmeldung: 27.11.2019
(73) Patentinhaber: MTU Aero Engines AG, 80995 München (DE)
(72) Erfinder: Stiehler, Frank, 04924 Bad Liebenwerda (DE); Kempinger, Georg, 85386 Eching (DE); Kraus, Jürgen, 85221 Dachau (DE); Schlothauer, Steffen, 85253 Erdweg (DE); Liebl, Christian, 85461 Bockhorn (DE); Eichinger, Alois, 85276 Pfaffenhofen (DE); Köbke, Thomas, 82223 Eichenau (DE)

(56) Entgegenhaltungen:
- EP-A1- 3 075 471
- GB-A- 2 522 315
- US-A1- 2016 281 534
- US-B2- 9 234 439

## Beschreibung

### Technisches Gebiet

Die vorliegende Erfindung betrifft ein Lagerkammergehäuse zum Lagern einer Welle einer Strömungsmaschine.

### Stand der Technik

Bei der Strömungsmaschine kann es sich bspw. um ein Strahltriebwerk handeln, z. B. um ein Mantelstromtriebwerk. Funktional gliedert sich die Strömungsmaschine in Verdichter, Brennkammer und Turbine. Etwa im Falle des Strahltriebwerks wird angesaugte Luft vom Verdichter komprimiert und in der nachgelagerten Brennkammer mit hinzugemischtem Kerosin verbrannt. Das entstehende Heißgas, eine Mischung aus Verbrennungsgas und Luft, durchströmt die nachgelagerte Turbine und wird dabei expandiert. Die Turbine ist in der Regel aus mehreren Stufen mit jeweils einem Stator (Leitschaufelkranz) und einem Rotor (Laufschaufelkranz) aufgebaut, die Rotoren werden von dem Heißgas angetrieben. In jeder Stufe wird dem Heißgas dabei anteilig innere Energie entzogen, die in eine Bewegung des jeweiligen Laufschaufelkranzes und damit der Welle umgesetzt wird.

Der vorliegende Gegenstand betrifft ein Lagerkammergehäuse zum Lagern der Welle, wobei die Bezugnahme auf ein Strahltriebwerk den Erfindungsgedanken zunächst nicht in seiner Allgemeinheit beschränken soll. Bei der Strömungsmaschine kann es sich bspw. auch um eine stationäre Gasturbine handeln.

Beispiele für Lagerkammergehäuse sind aus den Dokumenten US9234439B2, GB2522315A, US20160281534A1 und EP3075471A1 bekannt.

### Darstellung der Erfindung

Der vorliegenden Erfindung liegt das technische Problem zugrunde, ein besonders vorteilhaftes Lagerkammergehäuse für eine Strömungsmaschine, sowie ein vorteilhaftes Verfahren zu dessen Herstellung anzugeben.

Dies wird erfindungsgemäß mit einem Lagerkammergehäuse gemäß Anspruch 1 gelöst, sowie mit einem Verfahren zu dessen Herstellung gemäß Anspruch 9. Eine Gehäusewand des Lagerkammergehäuses ist bzw. wird generativ aufgebaut, also anhand eines Datenmodells durch bereichsweise selektives Verfestigen eines zuvor formlosen bzw. formneutralen Stoffes erzeugt (siehe unten im Detail). An einem axialen Ende der Gehäusewand wird dann ein Ölraumdeckel angeordnet, der einen innerhalb des Lagerkammergehäuses gebildeten Ölraum axial begrenzt, konkret einen Bereich des Ölraums, der nach radial innen von einer Innenschale des Lagerkammergehäuses begrenzt wird. Eine Besonderheit liegt im Verlauf der Gehäusewand, die sich nämlich in einem axialen Schnitt betrachtet von dem axialen Ende weg zunächst in einem Axialabschnitt axial erstreckt und dann in einem Radialabschnitt nach radial innen zurückspringt, und zwar bis zu der Innenschale. Betrachtet man die Außenwandfläche der Gehäusewand, bildet diese somit eine Tasche bzw. Ausnehmung, ist sie also mit einer Vertiefung geformt. Betrachtet man andererseits die Innenwandfläche der Gehäusewand in dem Radialabschnitt, begrenzt diese den Bereich des Ölraums, der radial zwischen Innenschale und Gehäusewand angeordnet ist, in axialer Richtung (dem Ölraumdeckel axial entgegengesetzt).

Dieser Verlauf, also die nach innen eingedrückte Form, kann hinsichtlich der generativen Herstellung von Vorteil sein. Mit der in dem Radialabschnitt nach innen gezogenen Gehäusewand wird nämlich die Innenwandfläche ein Stück weit nach axial hinten versetzt, und zwar im Vergleich zu einer über den Axialabschnitt hinaus im Wesentlichen axial verlaufenden Wand. Damit kann ein im Vergleich kurzer Abstand zwischen dem axialen Ende der Gehäusewand und der Innenwandfläche im Radialabschnitt realisiert werden, und die Innenwandfläche bzw. dieser Bereich sind gut zugänglich. Es kann somit im Anschluss an das generative Aufbauen bspw. materialabtragend nachbearbeitet werden, etwa durch Fräsen bzw. Drehen etc. (siehe auch unten im Detail), was hinsichtlich der finalen Formgebung aber auch die Oberflächengüte betreffend von Vorteil sein kann.

Andererseits wird aber eben nicht nur die Innenwandfläche nach axial hinten versetzt, sondern wird die Außenwandfläche mit "eingedrückt", was eine insgesamt gewichtsoptimierte Bauweise ermöglicht. So ließe sich eine axial nach hinten versetzte Innenwandfläche zwar auch erreichen, wenn die Tasche mit Material aufgefüllt wäre und die Außenwandfläche entsprechend axial weiterliefe. Das Auffüllen der Tasche würde dann aber mehr Material und damit ein höheres Gewicht bedeuten, was schon bei Herstellung und Transport nachteilig sein kann und sich bspw. im Falle eines Flugtriebwerks dauerhaft nachteilig auf dessen Kerosinverbrauch auswirken kann.

Bevorzugte Ausführungsformen finden sich in den abhängigen Ansprüchen und der gesamten Offenbarung, wobei in der Darstellung der Merkmale nicht immer im Einzelnen zwischen Vorrichtungs- und Verfahrens- bzw. Verwendungsaspekten unterschieden wird; jedenfalls implizit ist die Offenbarung hinsichtlich sämtlicher Anspruchskategorien zu lesen. Wird bspw. auf ein in bestimmter Weise hergestelltes Lagerkammergehäuse Bezug genommen, ist dies immer auch als Offenbarung eines entsprechenden Herstellungsverfahrens zu lesen, und umgekehrt.

Die Angaben "axial" und "radial", sowie die zugehörigen Richtungen, beziehen sich im Rahmen dieser Offenbarung auf die Drehachse der Welle, die bei Betrachtung der Strömungsmaschine im Gesamten mit deren Längsachse zusammenfällt. Um die Drehachse "umlaufend" drehen im Betrieb die Rotoren, nämlich in "Umlaufrichtung". "Ein" und "eine" sind als unbestimmte Artikel und damit ohne ausdrücklich gegenteilige Angabe immer auch als "mindestens ein" bzw. "mindestens eine" zu lesen. Wie nachstehend im Einzelnen deutlich wird, kann es bspw. über einen vollständigen Umlauf hinweg (360° um die Drehachse) verteilt eine Mehrzahl Taschen geben, in Umlaufrichtung erstreckt sich die Tasche über das Umlaufsegment, einen Teilwinkelbereich des vollständigen Umlaufs. Bevorzugt besteht über das Umlaufsegment hinweg eine Rotationssymmetrie mit der Drehachse als Symmetrieachse.

Radial innerhalb des Bereichs des Ölraums, der axial zwischen dem Radialabschnitt der Gehäusewand und dem Ölraumdeckel angeordnet ist, ist die Innenschale angeordnet, die eine Lageraufnahme bildet. In dieser Lageraufnahme kann ein Lager zum Lagern der Welle angeordnet werden bzw. sein, etwa ein Kugel- oder Wälzlager. Dieses Lager ist dann vorteilhafterweise nach radial außen von in dem Ölraum angeordnetem Öl umgeben, was eine gewisse Abschirmung zum Heißgaskanal der Strömungsmaschine hin schaffen und damit Temperaturgradienten und mechanische Spannungen reduzieren helfen kann. Der Heißgaskanal ist radial außerhalb angeordnet und erstreckt sich von der Brennkammer durch die Turbine bzw. Turbinenmodule zur Düse.

Bevorzugt kann an dem axialen Ende der Gehäusewand, an das der Ölraumdeckel gesetzt wird bzw. ist, ein Befestigungsmittel zu dessen Befestigung geformt sein. Bevorzugt wird der Ölraumdeckel zerstörungsfrei lösbar mit der Gehäusewand verbunden, vorzugsweise schraubverbunden. Als Befestigungsmittel kann dazu bspw. eine nach radial außen kragende Lasche mit einer Öse an dem axialen Ende vorgesehen sein bzw. kann ein entsprechender Flansch oder können Flanschsegmente vorgesehen sein. Auch unabhängig davon wird bzw. ist die den Ölraum nach radial außen begrenzende Gehäusewand bevorzugt gemeinsam mit der Innenschale aufgebaut. Zum Ausbilden der Lageraufnahme kann dann insbesondere deren nach radial innen weisende Innenwandfläche mechanisch nachbearbeitet werden und dann bspw. mit Nuten etc. geformt sein.

Bei einer bevorzugten Ausführungsform erstreckt sich die Gehäusewand in dem Radialabschnitt senkrecht zur Drehachse. Dies bezieht sich wiederum zunächst auf einen axialen Schnitt, bevorzugt ist ein über das gesamte Umlaufsegment hinweg entsprechender Verlauf. In diesem Zusammenhang wird auch deutlich, dass der radiale Verlauf der Gehäusewand im Radialabschnitt im Allgemeinen keine ausschließlich radiale (und damit senkrechte) Erstreckung implizieren muss, sondern die Gehäusewand auch (leicht) schräg zur Drehachse verlaufen kann. Dies gilt in analoger Weise für den Axialabschnitt, in dem sich die Gehäusewand im Allgemeinen nicht ausschließlich axial erstrecken muss, sondern bspw. auch (leicht) konisch ausgebildet sein kann. Bevorzugt liegt die Gehäusewand in dem Axialabschnitt gleichwohl achsparallel, erstreckt sie sich also ausschließlich axial (und umlaufend).

Gemäß der Erfindung folgt von dem axialen Ende der Gehäusewand auf dem Radialabschnitt ein Flankenabschnitt, der sich in dem axialen Schnitt betrachtet schräg zu der Drehachse nach radial außen erstreckt. Der Flankenabschnitt und der Radialabschnitt begrenzen miteinander die Tasche in axialer Richtung.

Bei einer bevorzugten Ausführungsform weist das Lagerkammergehäuse einen außenseitig an der Gehäusewand nach radial außen hervortretenden Befestigungsflansch auf. Dieser wird bzw. ist bevorzugt gemeinsam mit der Gehäusewand generativ aufgebaut. Der Befestigungsflansch dient der Befestigung des Lagerkammergehäuses und damit der gesamten Lageranordnung in der Strömungsmaschine, er muss also vergleichsweise große Kräfte aufnehmen. Dies kann sich aufgrund der generativen Herstellung besonders vorteilhaft bei der Auslegung berücksichtigen lassen. So kann bspw. ein sich von der Gehäusewand weg erstreckender Steg des Befestigungsflansches anhand strukturmechanischer Simulationen optimiert sein. Mit bspw. einer variablen Dicke und/oder angepassten Neigung relativ zur Drehachse kann eine gewisse Federwirkung erreicht werden, was einen Ausgleich von Schwingungen erlauben kann (die entstehen können, weil das Lager eine Verbindungsstelle zwischen Statoren und Rotoren darstellt).

In bevorzugter Ausgestaltung erstreckt sich ein Steg des Befestigungsflansches, mit dem dieser in die Gehäusewand übergeht, in dem axialen Schnitt betrachtet schräg zur Drehachse. Bevorzugt schließen der Steg und der Flankenabschnitt, der sich ebenfalls schräg erstreckt (siehe vorne), in ihrer jeweiligen schrägen Erstreckung denselben Winkel mit der Drehachse ein, sind sie also bezogen auf die Drehachse in gleicher Weise schräg angestellt. Bevorzugt fluchten der Steg und der Flankenabschnitt in dem axialen Schnitt in ihrer schrägen Erstreckung miteinander, liegen sie also (in dem Schnitt betrachtet) auf einer gemeinsamen, zur Drehachse schrägen Geraden. Eine Orientierung "schräg" meint generell nicht senkrecht und nicht parallel, es kann bspw. ein Winkel von mindestens 10° bzw. 20° und (davon unabhängig) nicht mehr als 80° bzw. 70° mit der Drehachse eingeschlossen werden.

Gemäß der Erfindung begrenzt ein Seitenwandabschnitt der Gehäusewand die Tasche in Umlaufrichtung. In diesem Seitenwandabschnitt erstreckt sich die Gehäusewand axial und radial. Von einem Grund der Tasche weg steigt die Gehäusewand dort also lokal nach außen an. Ein entsprechender Seitenwandabschnitt kann einerseits bezogen auf das Lagerkammergehäuseinnere fluidisch eine Funktion übernehmen (zur Ölführung, siehe unten), er kann aber andererseits auch bereits mechanisch von Interesse sein, gewissermaßen eine Versteifungsrippe darstellen.

In bevorzugter Ausgestaltung schließt in einem zu der Drehachse senkrechten Schnitt betrachtet die Gehäusewand in dem Seitenwandabschnitt mit der Gehäusewand im Flankenabschnitt (dort wo dieser an den Seitenwandabschnitt grenzt) einen Winkel von mindestens 80°, bevorzugt mindestens 90°, und (davon unabhängig) höchstens 100°, bevorzugt höchstens 95°, ein.

Gemäß der Erfindung gibt es einen zweiten Seitenwandabschnitt, der zu dem bislang diskutierten ersten Seitenwandabschnitt in Umlaufrichtung versetzt ist. Von der Tasche in dem Umlaufsegment ausgehend folgt in Umlaufrichtung somit zunächst der erste und dann der zweite Seitenwandabschnitt, der dann bevorzugt seinerseits eine weitere Tasche begrenzt. Der erste und der zweite Seitenwandabschnitt sind dann also umlaufend nächst benachbarten Taschen zugeordnet, wobei die erste Seitenwand die hauptanspruchsgemäße Tasche gemeinsam mit einem weiteren Seitenwandabschnitt begrenzt (einem dritten in dieser Terminologie, nicht in der Abfolge in Umlaufrichtung).

Der erste und der zweite Seitenwandabschnitt begrenzen miteinander in der Umlaufrichtung einen Verbindungskanal. Dieser verbindet den am Ölraumdeckel bzw. axialen Ende der Gehäusewand angeordneten Bereich des Ölraums, der die Lageraufnahme umgibt (siehe vorne), mit einem Bereich radial innerhalb der Tasche bzw. generell mit dem übrigen Ölraum innerhalb des Lagerkammergehäuses. In dem Lagerkammergehäuse kann es axial beabstandet bspw. auch eine weitere Lageraufnahme geben, wobei dann bevorzugt auch ein Bereich bei dieser bzw. um diese mit dem Bereich am axialen Ende der Gehäusewand verbunden ist (über den Verbindungskanal).

Gemäß der Erfindung ist in die Gehäusewand eine Anschlussöffnung eingebracht, die eine Verbindung zwischen dem Ölraum und einem Außenbereich außerhalb der Gehäusewand schafft. Bevorzugt ist die Anschlussöffnung radial orientiert, besonders bevorzugt liegt ihre Mittenachse zur Drehachse senkrecht. Unabhängig davon im Einzelnen liegt die Anschlussöffnung auf derselben Axialposition wie die Tasche, folgt sie also in anderen Worten in Umlaufrichtung auf die Tasche bzw. auf das Umlaufsegment (unter Vernachlässigung eines etwaigen Radialversatzes).

In bevorzugter Ausgestaltung ist die Anschlussöffnung in einem Anschlussabschnitt der Gehäusewand angeordnet, der umlaufend zwischen dem ersten und dem zweiten Seitenwandabschnitt angeordnet ist. Die Anschlussöffnung liegt also auf derselben Umlaufposition wie der Verbindungskanal. Ein entsprechendes Zusammenlegen der Strukturen kann bspw. hinsichtlich der generativen Herstellung von Interesse sein, weil so nur an der gemeinsamen Umlaufposition eine komplexere Geometrie aufgebaut bzw. nachbearbeitet werden muss. Im Allgemeinen können eine Anschlussöffnung und ein Verbindungskanal aber selbstverständlich auch gesondert, also umlaufend zueinander versetzt vorgesehen werden.

In bevorzugter Ausgestaltung bildet ein nach radial außen hervortretender Anschlussstutzen die Anschlussöffnung. Dieser Anschlussstutzen geht dann bevorzugt mit einer sich axial und radial erstreckenden Rippe in die Gehäusewand über. Dies kann einerseits strukturmechanisch von Interesse sein, andererseits aber insbesondere auch das generative Aufbauen vereinfachen helfen. Bezogen auf die Aufbaurichtung ist die Rippe dem Anschlussstutzen bevorzugt vorgelagert, so dass sie also bildlich gesprochen einen "weicheren" Übergang zu dem Anschlussstutzen hin schafft, also einen Überhang zumindest reduzieren hilft.

Wenngleich generell auch eine Anschlussöffnung denkbar ist, die bereits beim generativen Aufbauen frei bleibt, wird sie bevorzugt nachträglich mechanisch eingebracht. Es wird dann also generativ der Zapfen aufgebaut und anschließend die Anschlussöffnung von radial außen her eingebracht, etwa gebohrt oder gefräst.

Bei einer bevorzugten Ausführungsform erstreckt sich die Tasche in Umlaufrichtung über höchstens 60°, wobei höchstens 50°, 40° bzw. 30° in der Reihenfolge der Nennung zunehmend weiter bevorzugt sind. Mögliche Untergrenzen können bspw. bei mindestens 10° bzw. 20° liegen. Über den Umlauf verteilt gibt es bevorzugt eine Mehrzahl Taschen, also mindestens zwei, in der Regel aber noch mehr, etwa mindestens drei, vier bzw. fünf Taschen (mit möglichen Obergrenzen bei z. B. höchstens 20 bzw. 15). Die bevorzugt in einer Mehrzahl vorgesehenen Taschen können sich in ihrer Erstreckung in Umlaufrichtung auch unterscheiden, die bevorzugten Winkelangaben gelten somit zunächst für zumindest eine Tasche, bevorzugt für zumindest einige, besonders bevorzugt für sämtliche Taschen.

Wie bereits erwähnt, betrifft die Erfindung auch ein Verfahren zum Herstellen eines vorliegend offenbarten Lagerkammergehäuses, wobei die Gehäusewand generativ aufgebaut wird. Bevorzugt erfolgt das generative Aufbauen in einem Pulverbettverfahren. Der Werkstoff, aus dem die Gehäusewand hergestellt wird, wird dabei in Pulverform sequenziell Schicht für Schicht aufgetragen, wobei je Schicht selektiv ein anhand des Datenmodells (der Bauteilgeometrie, siehe vorne) vorbestimmter Bereich verfestigt wird. Die Verfestigung erfolgt durch ein Aufschmelzen mittels einer Strahlquelle, wobei im Allgemeinen bspw. auch eine Elektronenstrahlquelle denkbar ist. Bevorzugt wird mit einer Laserquelle, also einem Laserstrahl, aufgeschmolzen, ist das generative Aufbauen also ein selektives Laserschmelzen (SLM).

In bevorzugter Ausgestaltung weist die Aufbaurichtung dabei von dem Ende der Gehäusewand zu dem Radialabschnitt. Es wird also vom axialen Ende der Gehäusewand her zunächst der Axialabschnitt, dann der Radial- und schließlich der Flankenabschnitt aufgebaut. Bezogen auf das generativ aufgebaute Bauteil insgesamt können dabei dem axialen Ende des Gehäuseabschnitts vorgelagert gleichwohl auch noch andere Bereiche aufgebaut werden, etwa anteilig die Innenschale (vgl. auch das Ausführungsbeispiel zur Illustration).

Bei dem generativen Aufbauen zu dem Radialabschnitt hin werden zur Erzeugung der gewünschten Innenwandfläche bevorzugt zunächst zwei aufeinander zulaufende Flanken aufgebaut (die in einem axialen Schnitt betrachtet ein V bilden). Anschließend wird materialabtragend nachbearbeitet, etwa durch Drehen oder Fräsen, und werden diese Flanken teilweise abgetragen, sodass eine U-Form resultiert. Aufgrund des erfindungsgemäßen Gehäusewandverlaufs (siehe vorne) ist der Innenraum für eine solche Nachbearbeitung gut zugänglich (vor dem Ansetzen des Ölraumdeckels).

Gegenstand dieser Offenbarung ist auch die Verwendung eines vorliegend offenbarten Lagerkammergehäuses für eine Strömungsmaschine, insbesondere für ein Strahltriebwerk. Bevorzugt findet das Lagerkammergehäuse in einem Turbinenzwischengehäuse Einsatz. Im Betrieb nimmt es die Welle der Strömungsmaschine auf, die dann um die Drehachse rotiert, wobei der Ölraum des Lagerkammergehäuses mit Öl gefüllt ist. Das Turbinenzwischengehäuse kann im Allgemeinen auch zwischen der Brennkammer und der/den Turbinenmodul(en) angeordnet werden, bevorzugt ist es zum Anordnen zwischen zwei Turbinenmodulen ausgelegt, z. B. zwischen Hochdruck und Mittel- bzw. Niederdruckturbine. In dem Lagerkammergehäuse kann bzw. können dann ein oder mehrere Lager zum Führen der Welle angeordnet sein, etwa im Falle des Ausführungsbeispiels ein Kugel- und ein Wälzlager. Offenbart sein soll ausdrücklich auch ein Turbinenzwischengehäuse mit einem erfindungsgemäßen Lagerkammergehäuse, sowie ein Turbinenzwischengehäuse.

### Kurze Beschreibung der Zeichnungen

Im Folgenden wird die Erfindung anhand eines Ausführungsbeispiels näher erläutert, wobei die einzelnen Merkmale im Rahmen der nebengeordneten Ansprüche auch in anderer Kombination erfindungswesentlich sein können und auch weiterhin nicht im Einzelnen zwischen den unterschiedlichen Anspruchskategorien unterschieden wird.

Im Einzelnen zeigt
- Figur 1: ein Strahltriebwerk in einem Axialschnitt;
- Figur 2: ein erfindungsgemäßes Lagerkammergehäuse in einer axial geschnittenen Seitenansicht;
- Figur 3: das Lagerkammergehäuse gemäß Fig. 2 in einer axial geschnittenen Seitenansicht, mit einer gegenüber Fig. 2 verdrehten Schnittebene;
- Figur 4: das Lagerkammergehäuse gemäß den Fig. 2 und 3 in einer Schrägansicht von axial hinten;
- Figur 5: die Anordnung gemäß Fig. 4 in einer angeschnittenen Darstellung, mit einer zur Drehachse senkrechten Schnittebene.

### Bevorzugte Ausführungen der Erfindung

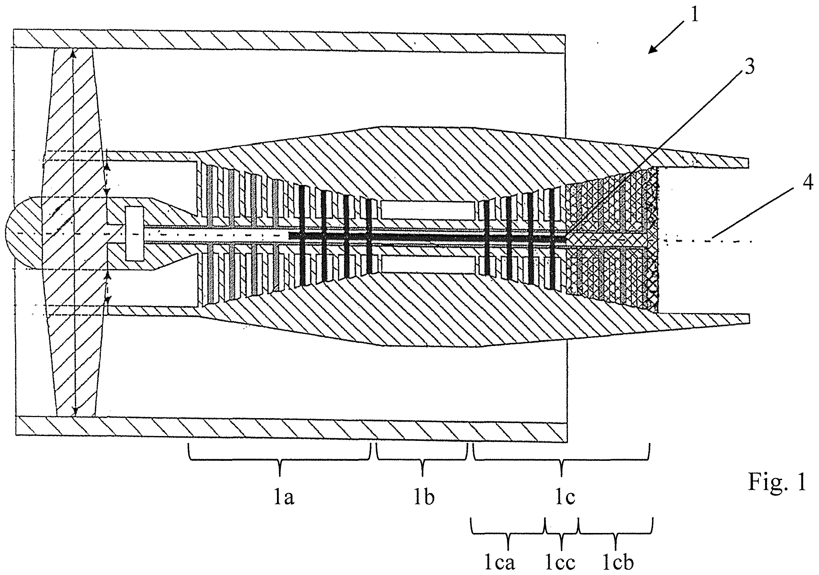

Fig. 1 zeigt eine Strömungsmaschine 1 in schematischer Ansicht, konkret ein Strahltriebwerk. Die Strömungsmaschine 1 gliedert sich funktional in Verdichter 1a, Brennkammer 1b und Turbine 1c. Sowohl der Verdichter 1a als auch die Turbine 1c sind vorliegend jeweils aus zwei Modulen aufgebaut. Zwischen einem der Brennkammer 1b unmittelbar nachgelagerten Hochdruckturbinenmodul 1ca und einem Nieder- bzw. Mitteldruckturbinenmodul 1cb findet sich das Turbinenzwischengehäuse 1cc. Die Rotoren der Turbinenmodule 1ca, cb drehen jeweils auf einer Welle 3 um eine Drehachse 4. In dem Turbinenzwischengehäuse 1cc ist bzw. sind Lager für diese Welle 3 angeordnet.

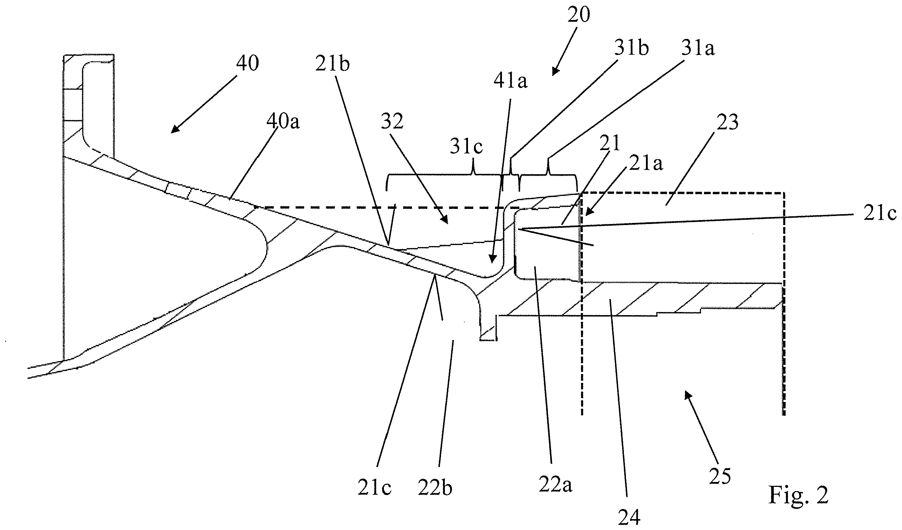

**Fig. 2** zeigt einen Teil eines erfindungsgemäßen Lagerkammergehäuses 20 in einer axial geschnittenen Seitenansicht, die Schnittebene beinhaltet also die Drehachse 4. Das Lagerkammergehäuse 20 weist eine generativ in einem Pulverbettverfahren (durch SLM) aufgebaute Gehäusewand 21 auf, die einen Ölraum 22 (22a, 22b) radial begrenzt An ein axiales Ende 21a der Gehäusewand 21 ist ein Ölraumdeckel 23 gesetzt, der in Fig. 2 nur strichliert angedeutet ist. Dieser begrenzt den Ölraum 22, konkret einen an dem axialen Ende 21a angeordneten Bereich 22a davon, axial. Der Ölraumbereich 22a ist radial außerhalb einer von einer Innenschale 24 gebildeten Lageraufnahme 25 angeordnet. Die Aufnahme 25 nimmt ein (nicht dargestelltes) Kugellager auf, in dem die Welle 3 geführt ist. Das in dem Ölraumbereich 22a radial außerhalb des Kugellagers angeordnete Öl schafft eine gewisse Abschirmung zum Heißgaskanal der Strömungsmaschine 1 hin, was Temperaturgradienten und damit mechanische Spannungen reduzieren helfen kann.

Eine Besonderheit liegt vorliegend in der Erstreckung der Gehäusewand 21 von dem axialen Ende 21a weg. Die Gehäusewand 21 erstreckt sich in einem Axialabschnitt 31a zunächst axial und springt dann in einem Radialabschnitt 31b nach radial innen zurück. Eine Außenwandfläche 21b der Gehäusewand 21 bildet dort also eine Tasche 32. Von deren Grund weg steigt die Gehäusewand 21 dann in einem Flankenabschnitt 31c wieder nach radial außen an. Eine der Außenwandfläche 21b entgegengesetzte Innenwandfläche 21c der Gehäusewand liegt in dem Radialabschnitt 31b der Erstreckung der Gehäusewand 21 entsprechend senkrecht zur Drehachse. Die Innenwandfläche 21c begrenzt dort den Ölraumbereich 22a axial, und zwar dem Ölraumdeckel 23 entgegengesetzt.

Die Gehäusewand 21c ist in dem Radialabschnitt 31b somit nach axial hinten versetzt, ist also vor dem Anbringen des Ölraumdeckels 23 gut für eine mechanische Nachbearbeitung zugänglich, was in Anbetracht der generativen Herstellung vorteilhaft ist (vgl. auch die Beschreibungseinleitung). Andererseits ist nun aber nicht einfach nur die Innenwandfläche 21c nach axial hinten versetzt, sondern ist zusätzlich die Tasche 32 ausgebildet. Würde die Gehäusewand 21 nicht nach radial innen zurückspringen, sondern weiter nach axial vorne verlaufen (vgl. die strichlierte Linie zur Illustration), wenn also der gesamte Bereich unterhalb der strichlierten Linie mit Material aufgefüllt massiv ausgeführt wäre, hätte das Lagerkammergehäuse deutlich mehr Gewicht.

Die Tasche 32 wird axial von der Gehäusewand 21 in dem Radialabschnitt 31b und der Gehäusewand 21 in dem Flankenabschnitt 31c begrenzt. Wie aus Fig. 2 ersichtlich, steigt die Gehäusewand 21 in dem Flankenabschnitt 31c schräg zur Drehachse 4 nach außen an. Außenseitig weist das Lagerkammergehäuse 20 einen Befestigungsflansch 40 auf, der mit einem Steg 40a in die Gehäusewand 21 übergeht. Auch dieser Steg 40a liegt schräg zur Drehachse 4, und zwar mit der schrägen Erstreckung der Gehäusewand 21 im Flankenabschnitt 31c fluchtend.

In Umlaufrichtung wird die Tasche 32 von der Gehäusewand 21 in einem ersten Seitenwandabschnitt 41a begrenzt, der in Fig. 2 nur zum Teil zu sehen ist.

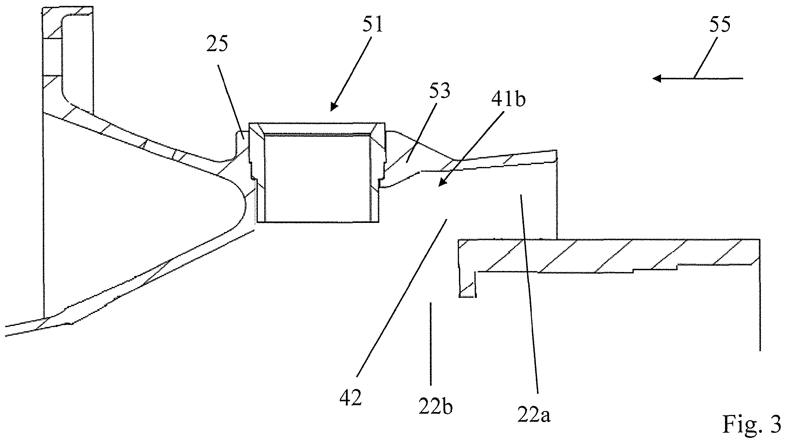

In Fig. 3 liegt der erste Seitenwandabschnitt 41a vor der Zeichenebene und fällt der Blick auf einen zweiten Seitenwandabschnitt 41b. Miteinander begrenzen die Seitenwandabschnitte 41a,b einen Verbindungskanal 42, der den Ölraumbereich 22a mit einem radial innerhalb der Tasche 32 angeordneten Ölraumbereich 22b verbindet.

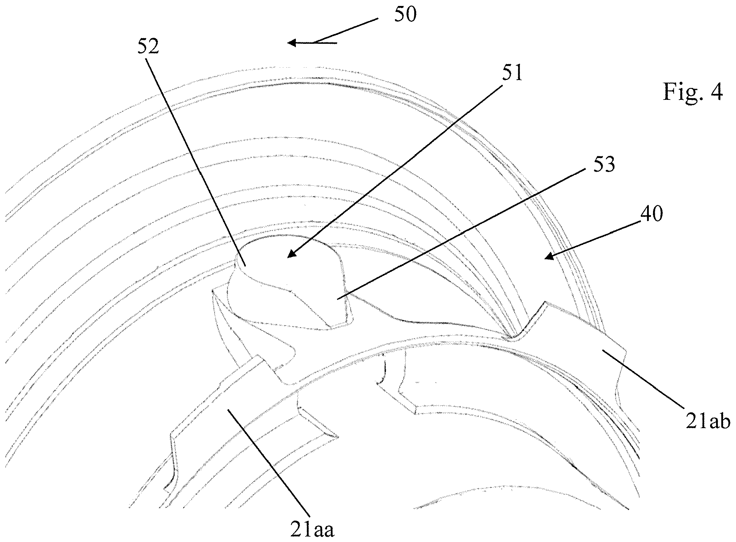

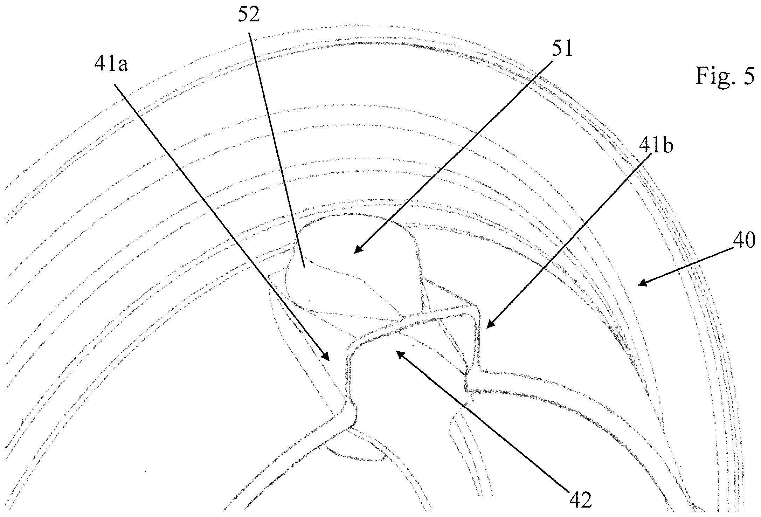

Zur Veranschaulichung wird im Folgenden ergänzend auch auf **Fig. 4** und **Fig. 5** verwiesen. Generell bezeichnen dieselben Bezugszeichen dieselben Teile und wird bezüglich deren Erläuterung immer auch auf die Beschreibung zu den anderen Figuren verwiesen.

In Fig. 4 und insbesondere in der geschnittenen Ansicht gemäß Fig. 5 sind zum einen die Seitenwandabschnitte 41a,b und ist ferner der davon begrenzte Verbindungskanal 42 zu erkennen. In der nicht geschnittenen Darstellung gemäß Fig. 4 fällt der Blick auf das axiale Ende 21a der Gehäusewand, dort sind Montageflansche 21aa,ab zur Montage des Ölraumdeckels 23 zu erkennen. In Umlaufrichtung 50 zwischen den Seitenwandabschnitten 41a,b ist in die Gehäusewand 21 eine Anschlussöffnung 51 eingebracht. Diese ist in einem Anschlussstutzen 52 angeordnet, der auch in dem Schnitt gemäß Fig. 3 zu erkennen ist. Wie in den Fig. 4 und 5 und auch dem Schnitt gemäß Fig. 3 ersichtlich, geht der Anschlussstutzen 52 mit einer Rippe 53 in die Gehäusewand 21 über. Dies motiviert sich über die generative Herstellung, so kann ein kritischer Überhang beim Stutzen 52 vermieden werden. Die Aufbaurichtung 55 weist in den Fig. 4 und 5 nach schräg vorne, Fig. 5 zeigt insoweit also genau das Negativ eines im Aufbau befindlichen Bauteils.

### BEZUGSZEICHENLISTE

| | | | |
|---|---|---|---|
| Strömungsmaschine | | | 1 |
| | Verdichter | | 1a |
| | Brennkammer | | 1b |
| | Turbine | | 1c |
| | | Hochdruckturbinenmodul | 1ca |
| | | Mitteldruckturbinenmodul | 1cb |
| | | Turbinenzwischengehäuse | 1cc |
| Welle | | | 3 |
| Drehachse | | | 4 |
| Lagerkammergehäuse | | | 20 |
| Gehäusewand | | | 21 |
| | axiales Ende davon | | 21a |
| | Außenwandfläche | | 21b |
| | Innenwandfläche | | 21c |
| Ölraum | | | 22 |
| | Bereich davon | | 22a |
| | weiterer Bereich davon | | 22b |
| Ölraumdeckel | | | 23 |
| Innenschale | | | 24 |
| Lageraufnahme | | | 25 |
| Abschnitte | | | 31 |
| | Axialabschnitt | | 31a |
| | Radialab schnitt | | 31b |
| | Flankenabschnitt | | 31c |
| Tasche | | | 32 |
| Befestigungsflansch | | | 40 |
| | Steg davon | | 40a |
| Seitenwandab schnitte | | | 41 |
| | erster | | 41a |
| | zweiter | | 41b |
| Verbindungskanal | | | 42 |
| Umlaufrichtung | | | 50 |
| Anschlussöffnung | | | 51 |
| Anschlussstutzen | | | 52 |
| Rippe | | | 53 |
| Aufbaurichtung | | | 55 |

## Patentansprüche

1. Lagerkammergehäuse (20) zum Lagern einer Welle (3) einer Strömungsmaschine (1), mit
einer generativ aufgebauten Gehäusewand (21) und einem Ölraumdeckel (23),
wobei, jeweils bezogen auf eine Drehachse (4) der Welle (3), die Gehäusewand (21) einen Ölraum (22a, 22b) des Lagerkammergehäuses (20) nach radial au-ßen begrenzt und der Ölraumdeckel (23), an einem axialen Ende (21a) der Gehäusewand (21) angeordnet, einen Bereich (22a) des Ölraums axial begrenzt, wobei dieser Bereich (22a) von einer Innenschale (24) des Lagerkammergehäuses (20) nach radial innen begrenzt wird,
und wobei, jeweils bezogen auf die Drehachse (4) der Welle (3), die Gehäusewand (21) in einem Umlaufsegment von dem axialen Ende (21a) weg in einem axialen Schnitt betrachtet zunächst in einem Axialabschnitt (31a) eine axiale Erstreckung hat und dann in einem Radialabschnitt (31b) nach radial innen bis zu der Innenschale (24) zurückspringt,
sodass in dem Umlaufsegment eine dem Ölraum (22a, 22b) abgewandte Außenwandfläche (21b) der Gehäusewand (21) von außen betrachtet eine Tasche (32) bildet, wobei sich die Gehäusewand (21) in dem Umlaufsegment in einem Flankenabschnitt (31c), der von dem axialen Ende (21a) der Gehäusewand (21) weg auf den Radialabschnitt (31b) folgt, in dem axialen Schnitt betrachtet schräg zu der Drehachse (4) nach radial außen erstreckt, wobei der Flankenabschnitt (31c) und der Radialabschnitt (31b) miteinander die Tasche (32) in axialer Richtung begrenzen und
in dem Radialabschnitt (31b) eine der Außenwandfläche (21b) entgegengesetzte Innenwandfläche (21c) der Gehäusewand (21) den Bereich (22a) des Ölraums axial begrenzt, und zwar dem Ölraumdeckel (23) axial entgegengesetzt, wobei radial innerhalb des Bereichs des Ölraums (22a), der axial zwischen dem Radialabschnitt (31b) der Gehäusewand und dem Ölraumdeckel (23) angeordnet ist, die Innenschale (24) angeordnet ist, die eine Lageraufnahme (25) bildet, wobei
in die Gehäusewand (21) eine Anschlussöffnung (51) eingebracht ist, welche den Ölraum (22a, 22b) mit einem Außenbereich außerhalb der Gehäusewand verbindet, wobei die Anschlussöffnung (51) auf einer Axialposition mit der Tasche (32) angeordnet ist, wobei
die Gehäusewand (21) in einem ersten Seitenwandabschnitt (41a), in dem die Außenwandfläche (21b) der Gehäusewand (21) die Tasche (32) in Umlaufrichtung begrenzt, eine axiale und radiale Erstreckung hat und
die Gehäusewand (21) auch in einem zweiten Seitenwandabschnitt (41b), der zu dem ersten Seitenwandabschnitt (41a) in der Umlaufrichtung versetzt ist, eine axiale und radiale Erstreckung hat, wobei die Gehäusewand (21) mit ihrer Erstreckung in dem ersten (41a) und dem zweiten Seitenwandabschnitt (41b) in der Umlaufrichtung einen Verbindungskanal (42) begrenzt, der den Bereich (22a) des Ölraums mit einem weiteren Bereich (22b) des Ölraums radial innerhalb der Tasche (32) verbindet.

2. Lagerkammergehäuse (20) nach Anspruch 1, bei welchem sich die Gehäusewand (21) in dem Radialabschnitt (31b) in dem axialen Schnitt betrachtet senkrecht zu der Drehachse (4) erstreckt.

3. Lagerkammergehäuse (20) nach einem der vorstehenden Ansprüche mit einem außenseitig an der Gehäusewand (21) nach radial außen hervortretenden Befestigungsflansch (40) zur Befestigung des Lagerkammergehäuses (20).

4. Lagerkammergehäuse (20) nach den Ansprüchen 1 und 3, bei welchem sich ein Steg (40a) des Befestigungsflansches (40), der in die Gehäusewand (21) übergeht, in dem Umlaufsegment in dem axialen Schnitt betrachtet schräg zu der Drehachse (4) erstreckt, wobei der Steg (40a) und die Gehäusewand (21) in dem Flankenabschnitt (31a) in dem axialen Schnitt betrachtet in ihrer zu der Drehachse (4) schrägen Erstreckung miteinander fluchten.

5. Lagerkammergehäuse (20) nach Anspruch 1, bei welchem die Gehäusewand (21) in dem ersten Seitenwandabschnitt (41a) mit der Gehäusewand (21) in einem an den ersten Seitenwandabschnitt (41a) grenzenden Bereich des Flankenabschnitts (31c) in einem zu der Drehachse (4) senkrechten Schnitt betrachtet einen Winkel von mindestens 80° und von höchstens 100° einschließt.

6. Lagerkammergehäuse (20) nach Anspruch 1, bei welchem die Anschlussöffnung (51) in einem in der Umlaufrichtung zwischen dem ersten Seitenwandabschnitt (41a) und dem zweiten Seitenwandabschnitt (41b) angeordneten Anschlussabschnitt gebildet ist.

7. Lagerkammergehäuse (20) nach Anspruch 6, bei welchem ein nach radial außen hervortretender Anschlussstutzen (52) die Anschlussöffnung (51) bildet, wobei der Anschlussstutzen (52) mit einer sich axial und radial erstreckenden Rippe (53) in die übrige Gehäusewand (21) übergeht.

8. Lagerkammergehäuse (20) nach einem der vorstehenden Ansprüche, bei welchem sich die Tasche (32) in Umlaufrichtung über höchstens 60° erstreckt.

9. Verfahren zum Herstellen eines Lagerkammergehäuses (20) nach einem der vorstehenden Ansprüche, bei welchem die Gehäusewand (21) generativ aufgebaut wird, vorzugsweise gemeinsam mit der Innenschale (24).

10. Verfahren nach Anspruch 9, bei welchem die Gehäusewand (21) von dem axialen Ende (21a) der Gehäusewand (21) her über den Axialabschnitt (31a) zu dem Radialabschnitt (31b) aufgebaut wird.

## Claims

1. Bearing chamber housing (20) for bearing a shaft (3) of a turbomachine (1), comprising
an additively constructed housing wall (21) and an oil chamber cover (23),
wherein, in each case relative to an axis of rotation (4) of the shaft (3), the housing wall (21) radially outwardly delimits an oil chamber (22a, 22b) of the bearing chamber housing (20), and the oil chamber cover (23), arranged at an axial end (21a) of the housing wall (21), axially delimits a region (22a) of the oil chamber, wherein said region (22a) is radially inwardly delimited by an inner shell (24) of the bearing chamber housing (20),
and wherein, in each case relative to the axis of rotation (4) of the shaft (3), the housing wall (21), in a circumferential segment remote from the axial end (21a), when viewed in an axial section, first comprises an axial extension in an axial portion (31a) and then, in a radial portion (31b), springs back radially inwardly as far as the inner shell (24), so that in the circumferential segment, an outer wall surface (21b) of the housing wall (21) that faces away from the oil chamber (22a, 22b), viewed from the outside, forms a pocket (32), wherein, in the circumferential segment, the housing wall (21), when viewed in the axial section, extends radially outward obliquely to the axis of rotation (4) in a flank portion (31c) which follows the radial portion (31b) in the direction away from the axial end (21a) of the housing wall (21), wherein the flank portion (31c) and the radial portion (31b) together delimit the pocket (32) in the axial direction and,
in the radial portion (31b), an inner wall surface (21c) of the housing wall (21) that is opposite the outer wall surface (21b) axially delimits the region (22a) of the oil chamber, specifically axially opposite the oil chamber cover (23), wherein the inner shell (24) is arranged radially within the region of the oil chamber (22a) that is arranged axially between the radial portion (31b) of the housing wall and the oil chamber cover (23), which inner shell forms a bearing receptacle (25), wherein
a connection opening (51) is introduced into the housing wall (21), which connection opening connects the oil chamber (22a, 22b) to an outer region outside the housing wall, wherein the connection opening (51) is arranged at an axial position with the pocket (32), wherein
the housing wall (21) has an axial and radial extension in a first side wall portion (41a), in which the outer wall surface (21b) of the housing wall (21) delimits the pocket (32) in the circumferential direction, and
the housing wall (21) also has an axial and radial extension in a second side wall portion (41b), which is offset from the first side wall portion (41a) in the circumferential direction, wherein the housing wall (21) delimits a connecting channel (42) in the circumferential direction with its extension in the first (41a) and the second side wall portion (41b), which connecting channel connects the region (22a) of the oil chamber to a further region (22b) of the oil chamber radially inside the pocket (32).

2. Bearing chamber housing (20) according to claim 1, in which the housing wall (21) extends perpendicularly to the axis of rotation (4) in the radial portion (31b) when viewed in the axial section.

3. Bearing chamber housing (20) according to any of the preceding claims, comprising a fastening flange (40) protruding radially outward on the outside of the housing wall (21), for fastening the bearing chamber housing (20).

4. Bearing chamber housing (20) according to claims 1 and 3, in which, in the circumferential segment, a web (40a) of the fastening flange (40), which merges into the housing wall (21), extends obliquely to the axis of rotation (4) when viewed in the axial section" wherein the web (40a) and the housing wall (21), in the flank portion (31a), are aligned with one another in their oblique extension with respect to the axis of rotation (4), when viewed in the axial section.

5. Bearing chamber housing (20) according to claim 1, in which the housing wall (21) in the first side wall portion (41a) forms an angle of at least 80° and at most 100° with the housing wall (21) in a region of the flank portion (31c) bordering the first side wall portion (41a), when viewed in a section perpendicular to the axis of rotation (4).

6. Bearing chamber housing (20) according to claim 1, in which the connection opening (51) is formed in a connection portion arranged between the first side wall portion (41a) and the second side wall portion (41b) in the circumferential direction.

7. Bearing chamber housing (20) according to claim 6, in which a radially outwardly projecting connecting piece (52) forms the connection opening (51), wherein the connecting piece (52) merges into the rest of the housing wall (21) with an axially and radially extending rib (53).

8. Bearing chamber housing (20) according to any of the preceding claims, in which the pocket (32) extends over a maximum of 60° in the circumferential direction.

9. Method for producing a bearing chamber housing (20) according to any of the preceding claims, in which the housing wall (21) is constructed additively, preferably together with the inner shell (24).

10. Method according to claim 9, in which the housing wall (21) is built up from the axial end (21a) of the housing wall (21) via the axial portion (31a) to the radial portion (31b).

## Revendications

1. Boîtier de chambre de palier (20) pour le palier d'un arbre (3) d'une turbomachine (1), comportant
une paroi de boîtier (21) construite par génération et un couvercle de chambre d'huile (23),
dans lequel, respectivement par rapport à un axe de rotation (4) de l'arbre (3), la paroi de boîtier (21) délimite une chambre d'huile (22a, 22b) du boîtier de chambre de palier (20) radialement vers l'extérieur et le couvercle de chambre d'huile (23), disposé à une extrémité axiale (21a) de la paroi de boîtier (21), délimite axialement une zone (22a) de la chambre d'huile, dans lequel cette zone (22a) est délimitée radialement vers l'intérieur par une coque intérieure (24) du boîtier de chambre de palier (20),
et dans lequel, respectivement par rapport à l'axe de rotation (4) de l'arbre (3), la paroi de boîtier (21), dans un segment périphérique, a, en partant de l'extrémité axiale (21a), vue en coupe axiale, d'abord une extension axiale dans une section axiale (31a) et ensuite, dans une section radiale (31b), revient radialement vers l'intérieur jusqu'à la coque intérieure (24), de sorte que, dans le segment périphérique, une surface de paroi extérieure (21b), opposée à la chambre d'huile (22a, 22b), de la paroi de boîtier (21), vue de l'extérieur, forme une poche (32), dans lequel la paroi de boîtier (21) s'étend dans le segment périphérique dans une section de flanc (31c), qui suit la section radiale (31b) en s'éloignant de l'extrémité axiale (21a) de la paroi de boîtier (21), vu dans la coupe axiale, s'étend obliquement par rapport à l'axe de rotation (4) vers l'extérieur dans le sens radial, dans lequel la section de flanc (31c) et la section radiale (31b) délimitent ensemble la poche (32) dans le sens axial et
dans la section radiale (31b), une surface de paroi intérieure (21c) de la paroi de boîtier (21) opposée à la surface de paroi extérieure (21b) délimite axialement la zone (22a) de la chambre d'huile, et ce axialement à l'opposé du couvercle de chambre d'huile (23), dans lequel radialement à l'intérieur de la zone de la chambre d'huile (22a), qui est disposée axialement entre la section radiale (31b) de la paroi de boîtier et le couvercle de chambre d'huile (23), est disposée la coque intérieure (24), qui forme un logement de palier (25), dans lequel
une ouverture de raccordement (51) est ménagée dans la paroi de boîtier (21), laquelle relie la chambre d'huile (22a, 22b) à une zone extérieure qui est extérieure à la paroi de boîtier, dans lequel l'ouverture de raccordement (51) est disposée sur une position axiale avec la poche (32), dans lequel
la paroi de boîtier (21) a une extension axiale et radiale dans une première section de paroi latérale (41a), dans laquelle la surface de paroi extérieure (21b) de la paroi de boîtier (21) délimite la poche (32) dans le sens circonférentiel et
la paroi de boîtier (21) a également une extension axiale et radiale dans une seconde section de paroi latérale (41b) qui est décalée par rapport à la première section de paroi latérale (41a) dans le sens circonférentiel, dans lequel la paroi de boîtier (21) délimite avec son extension dans la première (41a) et la seconde section de paroi latérale (41b) dans le sens circonférentiel un canal de liaison (42) qui relie la zone (22a) de la chambre d'huile à une autre zone (22b) de la chambre d'huile radialement à l'intérieur de la poche (32).

2. Boîtier de chambre de palier (20) selon la revendication 1, dans lequel la paroi de boîtier (21) s'étend dans la section radiale (31b) perpendiculairement à l'axe de rotation (4), vu dans la coupe axiale.

3. Boîtier de chambre de palier (20) selon l'une des revendications précédentes, comportant une bride de fixation (40) faisant saillie radialement vers l'extérieur du côté extérieur sur la paroi de boîtier (21) pour la fixation du boîtier de chambre de palier (20).

4. Boîtier de chambre de palier (20) selon les revendications 1 et 3, dans lequel une nervure (40a) de la bride de fixation (40), qui se raccorde à la paroi de boîtier (21), s'étend dans le segment circonférentiel, vu dans la coupe axiale, obliquement par rapport à l'axe de rotation (4), dans lequel la nervure (40a) et la paroi de boîtier (21) sont alignées l'une avec l'autre dans la section de flanc (31a), vu dans la coupe axiale, dans leur extension oblique par rapport à l'axe de rotation (4).

5. Boîtier de chambre de palier (20) selon la revendication 1, dans lequel la paroi de boîtier (21), dans la première section de paroi latérale (41a), forme un angle d'au moins 80 ° et d'au plus 100 ° avec la paroi de boîtier (21) dans une zone de la section de flanc (31c) adjacente à la première section de paroi latérale (41a), vu en coupe perpendiculaire à l'axe de rotation (4).

6. Boîtier de chambre de palier (20) selon la revendication 1, dans lequel l'ouverture de raccordement (51) est formée dans une section de raccordement disposée dans le sens circonférentiel entre la première section de paroi latérale (41a) et la seconde section de paroi latérale (41b).

7. Boîtier de chambre de palier (20) selon la revendication 6, dans lequel un embout de raccordement (52) faisant saillie radialement vers l'extérieur forme l'ouverture de raccordement (51), dans lequel l'embout de raccordement (52) se raccorde au reste de la paroi de boîtier (21) par une nervure (53) s'étendant axialement et radialement.

8. Boîtier de chambre de palier (20) selon l'une des revendications précédentes, dans lequel la poche (32) s'étend au maximum sur 60 ° dans le sens circonférentiel.

9. Procédé pour la fabrication d'un boîtier de chambre de palier (20) selon l'une des revendications précédentes, dans lequel la paroi de boîtier (21) est construite par génération, de préférence conjointement avec la coque intérieure (24).

10. Procédé selon la revendication 9, dans lequel la paroi de boîtier (21) est construite à partir de l'extrémité axiale (21a) de la paroi de boîtier (21) par l'intermédiaire de la section axiale (31a) vers la section radiale (31b).
